# EUROPEAN PATENT SPECIFICATION

(11) **EP 3 498 590 B1**
(45) Date of publication and mention of the grant of the patent: **23.09.2020**
(21) Application number: 17208808.0
(22) Date of filing: 20.12.2017
(51) Int. Cl.: B64C 1/06, B64D 11/06, B64C 1/00

(54) **COMPOSITE PASSENGER BENCH INTEGRATED WITH AIRCRAFT CABIN STRUCTURE**
KOMPOSITPASSAGIERSITZBANK INTEGRIERT MIT FLUGZEUGKABINENSTRUKTUR
BANQUETTE PASSAGERS EN COMPOSITE INTEGRÉE AVEC STRUCTURE DE LA CABINE DE L'AVION

(30) Priority: 13.12.2017 PL 42386717
(43) Date of publication of application: 19.06.2019
(73) Proprietor: FLARIS Spolka z ograniczona odpowiedzialnoscia, 58-560 Jelenia Gora (PL)
(72) Inventor: Ladzinski, Rafal, 58-560 Jelenia Gora (PL)
(74) Representative: Budzinski, Slawomir

(56) References cited:
- US-A1- 2008 290 715

## Description

The subject-matter of the invention is a composite durable structure of an airplane cabin stiffened by a spatial frame, for the crew and passengers, positioned substantially in a central part of a fuselage of the airplane, in particular a small airplane.

An airplane fuselage, in particular in a small airplane, constitutes a very important element of the airplane construction that determines numerous important properties of the airplane, in particular its strength. It also has to enable mounting all such mechanisms as for example wings, elements of flight controls, landing gear or driving motor and fuel tank(s). Of course, it also has to provide suitable space for crew and passengers or luggage.

For this purpose, in the airplane fuselage a respective segment is divided which constitutes a cabin for the crew and passengers and is positioned substantially in a central part of the airplane fuselage.

Known fuselages of airplane constructions, in particular in lightweight business airplanes or sport airplanes, are made so that their bearing elements such as formers, being transverse elements, and stringers, being longitudinal elements, are coupled and covered with an outer skin and inner sheathing. Often the outer skin and the inner sheathing are applied as sheets to cover a part of the entire outer or inner surface of the airplane. Then, systematically other elements of the airplane fuselage structure are added, such as frames, panels, brackets and reinforcement of other equipment elements.

From international patent application WO 2012169906 an airplane construction is known where an outer cover is made substantially of two elements made of composite materials. Such two halves of the outer structure of an airplane skin are coupled and reinforced with elements defined as formers, being transverse elements, and with stringers, being longitudinal elements.

From the specification of Polish patent application P.411578 a fuselage of an airplane construction is known, comprising an outer structure and transverse and longitudinal elements of an inner structure and characterized in that the outer structure is constituted by a left skin and right skin, and the inner structure is constituted by a left panel, right panel and complementary elements, wherein the outer structure elements are coupled with the inner structure elements. In the left skin of the outer structure, the right skin of the outer structure, left panel of the inner structure and the right panel of the inner structure there are window openings and door openings, where the left panel, right panel, complementary elements, window frames and door frames have walls that form longitudinal and transverse elements of the inner structure.

A fuselage of an airplane structure known from the prior art, although meets the assumed and expected goals, has some inconveniences and numerous disadvantages. One of its disadvantages is that the construction is very laborious in production. The fuselage has a very high number of individual parts and each of them requires prefabrication. At the same time, in order to provide suitable stiffness of the fuselage and distribute therein all the forces generated during the flight, the individual components have to show particular properties in this regard.

Also labor demand for the fuselage production is high, as well as the necessity to employ highly skilled workers. For these reasons, production of a fuselage of an airplane construction in a traditional manner known from the prior art is very expensive.

It is the object of the present invention to provide a solution that overcomes or at least alleviates at least one from the above mentioned inconveniences or provides opportunities for useful selection of a specific method for production of a fuselage of an airplane construction.

According to the invention, a composite durable airplane cabin structure in accordance with claim 1 is provided.

Preferably, at least some of such elements as the backrest framing, seat framing, armrest framing and complementary elements are made of metal.

Also preferably, at least some of such elements as the backrest framing, seat framing, armrest framing and complementary elements, are made of plastics.

Also preferably, the elements of the spatial frame are engaged by welding.

Also preferably, the elements of the spatial frame are engaged by gluing.

Also preferably, the elements of the spatial frame are engaged by riveting.

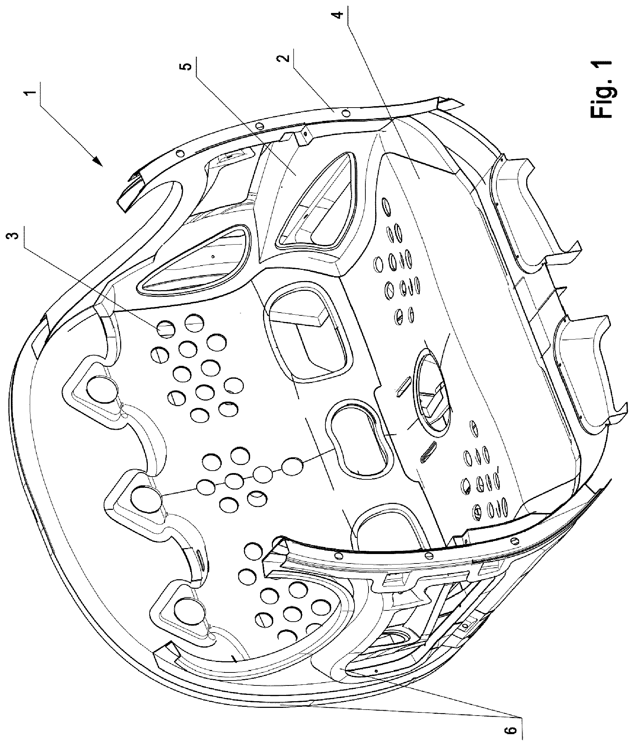

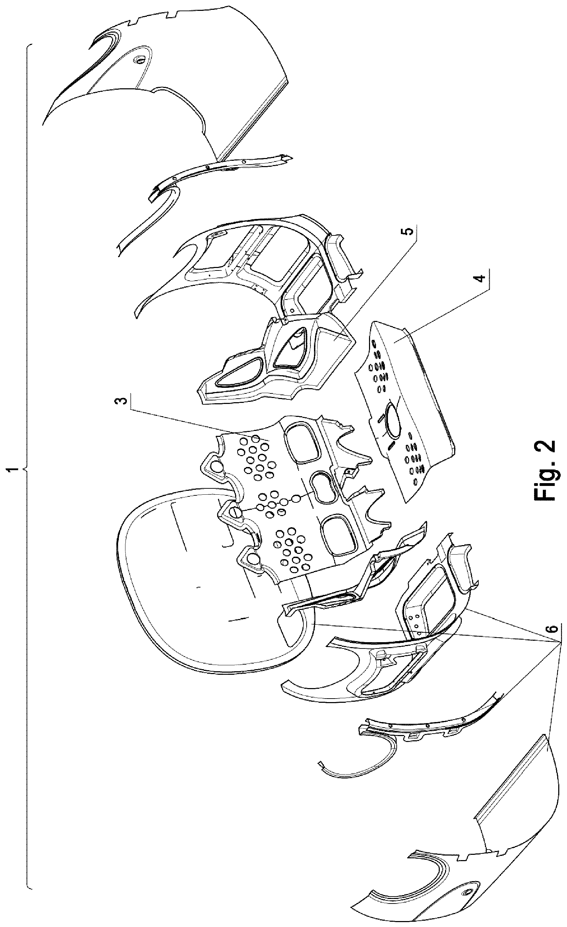

The object of the invention is shown in an embodiment in the drawing where fig. 1 shows a mounted composite durable structure of an airplane cabin stiffened by a spatial frame, in a perspective view, and fig. 2 shows a composite durable structure of an airplane cabin stiffened by a spatial frame, before mounting, in an exploded view.

As shown in fig. 1, a cabin segment (1) being a composite durable structure of an airplane cabin is constituted by a spatial frame (2) built of mutually coupled elements comprising passenger bench elements, i.e. a backrest framing (3), a seat framing (4) an armrest framing (5) and complementary elements (6). All these elements are fixedly mutually coupled before they are mounted in an airplane fuselage and when coupled they together form a spatial frame (2) of a high strength resulting from the spatial positioning of the coupled elements. The spatial frame (2) produced this way, is then mounted in the fuselage as a complete subassembly of the fuselage framing.

In fig. 2, the elements of the spatial frame (2) shown in an exploded view illustrate the mutual positioning in three dimensions of the elements comprising passenger bench elements, i.e. the backrest framing (3), seat framing (4) armrest framing (5) and complementary elements (6).

In the embodiment of fig. 1 and fig. 2 the elements comprised by a passenger bench, i.e. the backrest framing (3), the seat framing (4), the armrest framing (5) and complementary elements (6), are made of reinforced plastics and they are coupled by gluing, but of course in other embodiments some or all of the elements can be made of metal.

## Claims

1. A composite durable airplane cabin structure, wherein said structure is configured to be positioned in a central part of an airplane fuselage and forms a cabin segment (1) for a crew and passengers, whereby a passenger bench is arranged in the cabin segment (1), **characterized in that** the cabin segment constitutes a spatial frame (2) formed by mutually coupled elements of the passenger bench, said elements comprising a backrest framing (3), a seat framing (4), an armrest framing (5), and complementary elements (6) , said spatial frame (2) stiffening the airplane cabin.

2. A structure according to claim 1, **characterized in that** at least some of said elements are made of metal.

3. A structure according to claim 1, **characterized in that** at least some of said elements are made of plastics.

4. A structure according to claims 2 or 3, **characterized in that** said elements of the spatial frame (2) are coupled by means of welding.

5. A structure according to claims 2 or 3, **characterized in that** said elements of the spatial frame (2) are coupled by means of gluing.

6. A structure according to claims 2 or 3, **characterized in that** said elements of the spatial frame (2) are coupled by means of riveting.

## Patentansprüche

1. Eine widerstandsfähige Kompositflugzeugkabinenstruktur, wobei die Struktur so konfiguriert ist,
dass sie in einem zentralen Teil eines Flugzeugrumpfes positioniert werden kann und ein Kabinensegment (1) für eine Besatzung und Passagiere bildet, wobei eine Kompositpassagiersitzbank in dem Kabinensegment (1) angeordnet ist,
**dadurch gekennzeichnet, dass** das Kabinensegment einen räumlichen Rahmen (2) bildet, der durch gegenseitig gekoppelte Elemente der Kompositpassagiersitzbank gebildet wird, wobei die Elemente ein Rückenlehnengestell (3), ein Sitzgestell (4), ein Armlehnengestell (5) und komplementäre Elemente (6) umfassen, wobei der räumliche Rahmen (2) die Flugzeugkabine versteift.

2. Struktur nach Anspruch 1, **dadurch gekennzeichnet, dass** zumindest einige der Elemente aus Metall hergestellt sind.

3. Struktur nach Anspruch 1, **dadurch gekennzeichnet, dass** zumindest einige der Elemente aus Kunststoff hergestellt sind.

4. Struktur nach Anspruch 2 oder 3, **dadurch gekennzeichnet, dass** die Elemente des räumlichen Rahmens (2) durch Schweißen gekoppelt sind.

5. Struktur nach Anspruch 2 oder 3, **dadurch gekennzeichnet, dass** die Elemente des räumlichen Rahmens (2) durch Kleben gekoppelt sind.

6. Struktur nach Anspruch 2 oder 3, **dadurch gekennzeichnet, dass** die Elemente des räumlichen Rahmens (2) mittels Nieten gekoppelt sind.

## Revendications

1. Structure de cabine d'avion en composite durable, dans laquelle ladite structure est configurée pour être positionnée dans une partie centrale d'un fuselage d'avion et forme un segment de cabine (1) pour un équipage et des passagers, grâce à quoi un banc passagers est agencé dans le segment de cabine (1), **caractérisé en ce que** le segment de cabine constitue un cadre spatial (2) formé par des éléments mutuellement couplés de la banquette passager, lesdits éléments comprenant un cadre (3) de dossier, un cadre (4) de siège, un cadre (5) d'accoudoir et des éléments complémentaires (6) dudit cadre spatial (2) rigidifiant la cabine de l'avion.

2. Structure selon la revendication 1, **caractérisée en ce qu'au** moins certains desdits éléments sont en métal.

3. Structure selon la revendication 1, **caractérisée en ce qu'au** moins certains desdits éléments sont en matière plastique.

4. Structure selon les revendications 2 ou 3, **caractérisée en ce que** lesdits éléments du cadre spatial (2) sont couplés par soudage.

5. Structure selon les revendications 2 ou 3, **caractérisée en ce que** lesdits éléments du cadre spatial (2) sont couplés au moyen d'un collage.

6. Structure selon les revendications 2 ou 3, **caractérisée en ce que** lesdits éléments du cadre spatial (2) sont couplés au moyen d'un rivetage.
